# EUROPÄISCHE PATENTSCHRIFT

(11) **EP 2 414 703 B1**
(45) Veröffentlichungstag und Bekanntmachung des Hinweises auf die Patenterteilung: **01.05.2013**
(21) Anmeldenummer: 10707027.8
(22) Anmeldetag: 05.03.2010
(51) Int. Cl.: F16H 1/32

(54) **TAUMELRADWOLFROMGETRIEBE**
NUTATING-WOLFROM-GEAR
ENGRENAGE OSCILLANT

(30) Priorität: 01.04.2009 DE 102009002067
(43) Veröffentlichungstag der Anmeldung: 08.02.2012
(73) Patentinhaber: ZF Friedrichshafen AG, 88038 Friedrichshafen (DE)
(72) Erfinder: KIENZLE, Alfred, 88699 Frickingen (DE); PESCHECK, Jürgen, 88090 Immenstaad (DE); SCHULZ, Horst, 88045 Friedrichshafen (DE); KIRSCHNER, Tino, Friedrichshafen 88048 (DE); MÜLLER, Matthias, 88263 Horgenzell (DE)
(86) Internationale Anmeldenummer: PCT/EP2010/052795
(87) Internationale Veröffentlichungsnummer: WO 2010/112295

(56) Entgegenhaltungen:
- EP-A2- 0 861 995
- DE-A1- 19 630 486
- DE-A1- 19 928 385
- DE-A1-102006 024 779

## Beschreibung

Die vorliegende Erfindung betrifft ein Taumelradwolfromgetriebe gemäß dem Oberbegriff des Anspruches 1, insbesondere zur Anwendung als Robotergetriebe. So ein Taumelradwolfromgetribe ist aus dem Dokument EPO861995A bekannt.

Viele Anwendungen erfordern Getriebe mit sehr hohen Übersetzungen bei möglichst kompakter Bauform und mit möglichst geringer Masse. Eine Getriebeart, welche diese Voraussetzungen erfüllt, ist das Wolfromgetriebe, eine hochübersetzende Planetengetriebebauform. Wolfromgetriebe werden deshalb auch als Robotergetriebe eingesetzt, weil dabei hohe Übersetzungen bei geringem Verdrehspiel und hoher Laufruhe gefordert werden, um präzise Bewegungsabläufe mit hoher Wiederholgenauigkeit zu gewährleisten.

So ist beispielsweise aus der DE 19928385 A1 ein Wolfromgetriebe bekannt, welches ein angetriebenes Sonnenrad und zwei innenverzahnte Hohlräder aufweist, von denen eines gehäusefest angeordnet ist und das andere drehbar gelagert ist und den Abtrieb bildet. Des Weiteren sind mehrere Planetenräder vorgesehen, die auf Planetenraddrehachsen in einem Planetenträger gelagert sind. Die Planetenraddrehachsen verlaufen um einen Winkel α geneigt zu einer zentralen Getriebeachse. Die Planetenräder weisen jeweils zwei konische Verzahnungsbereiche auf. Die Planetenräder stehen in ständigem Zahneingriff mit dem Sonnenrad und den beiden Hohlrädern, von denen eines ebenfalls einen konischen Verzahnungsbereich aufweist. Das Wolfromgetriebe wird über das Sonnenrad angetrieben. Die Planetenräder kämmen gleichzeitig mit dem feststehenden Abstützhohlrad und dem drehbar gelagerten Hohlrad, welches den Abtrieb bildet. Die Planetenräder stützen sich an dem gehäusefesten Hohlrad ab und treiben das drehbare Abtriebshohlrad an. Geringfügig unterschiedliche Zähnezahlen an den beiden Hohlrädern führen dazu, dass zwischen Antrieb und Abtrieb eine sehr hohe Übersetzung ins Langsame erreicht wird. Der Steg als Planetenträger läuft leer mit.

Die Aufgabe der vorliegenden Erfindung ist es, ein kompaktes Getriebe mit hoher Übersetzung mit noch weniger Bauteilen zu schaffen, welches zugleich eine hohe Tragfähigkeit und Laufruhe aufweist. Das Getriebe soll insgesamt einen möglichst geringen Herstellungsaufwand erfordern.

Diese Aufgabe wird durch ein Taumelradwolfromgetriebe gemäß den Merkmalen des Patentanspruches 1 gelöst. Bevorzugte Ausgestaltungen der Erfindungen ergeben sich aus den Unteransprüchen.

Ein erfindungsgemäßes Taumelradwolfromgetriebe weist demnach eine Antriebswelle, zwei rotierbar auf einem Planetenträger angeordnete Planetenräder, ein feststehendes Abstützhohlrad und ein drehbares Abtriebshohlrad auf. Die Planetenräder sind dabei auf je einer Planetenraddrehachse rotierbar angeordnet. Die Antriebswelle, das Abstützhohlrad und das Abtriebshohlrad sind konzentrisch zu einer Zentralachse angeordnet und die Planetenraddrehachsen sind rotierbar um die Zentralachse angeordnet. Die Planetenraddrehachsen sind jeweils um einen gleich großen Winkel α bzw. α' gegenüber der Zentralachse geneigt. Jedes Planetenrad steht an einer Stelle seiner Außenverzahnung ständig im Eingriff mit der Innenverzahnung des Abstützhohlrades und des Abtriebshohlrades. Der Planetenträger bildet den Antrieb des Getriebes und ist deshalb drehfest mit der Antriebswelle verbunden. Die beiden Massenmittelpunkte der beiden Planetenräder sind mit dem gleichen Abstand zu der Zentralachse angeordnet und die Massenmittelpunkte der beiden Planetenräder sind zueinander mit einem Winkelversatz von 180 Grad um die Zentralachse angeordnet.

Diese Anordnung bewirkt, dass der Zahneingriff des ersten Planetenrades in die Innenverzahnungen des Abstützhohlrades und des Abtriebshohlrades um 180 Grad versetzt zum entsprechenden Zahneingriff des zweiten Planetenrades erfolgt. Mit anderen Worten greift das zweite Planetenrad diametral gegenüberliegend dem Zahneingriff des ersten Planetenrades in die Hohlradverzahnungen ein. Die Verzahnungen beider Planetenräder kämmen dabei dauernd mit den Innenverzahnungen beider Hohlräder. Die gleich großen Neigungswinkel α und α' der Planetenraddrehachsen bewirken zusammen mit dem Versatz der Planetenraddrehachsen um 180 Grad um die Zentralachse, dass die Planetenraddrehachsen entweder parallel oder konzentrisch zueinander verlaufen.

Ein derartiges Taumelradwolfromgetriebe benötigt gegenüber einem herkömmlichen Wolfromgetriebe weniger Bauteile, weil kein Sonnenrad und nur zwei Planetenräder vorgesehen sind. Die beiden Planetenräder können zudem identisch ausgeführt sein, was eine weitere Vereinfachung bei der Herstellung bedeutet. Der Winkelversatz der beiden Massenmittelpunkte zueinander um 180 Grad bewirkt eine Kompensation der Zentrifugalkräfte der Planetenräder, der Planetenlager und des Planetenträgers gegenüber der äußeren Lagerung. Es wird außerdem ein Drehmassenausgleich hinsichtlich der Exzentrizität bezogen auf die Zentralachse erreicht.

Durch den doppelten, gegenüberliegenden Zahneingriff beider Planetenräder in beide Hohlräder wird das durch die Verzahnungskräfte entstehende Drehmoment auf die Antriebswelle und die radial gerichteten Kräfte auf deren Lagerung ausgeglichen, sowie eine höhere Tragfähigkeit und damit ein höheres übertragbares Drehmoment erreicht, als beispielsweise bei Taumelradgetrieben, bei denen der Zahneingriff zwischen einem Taumelrad und einem Abtriebsglied nur an einer Stelle erfolgt.

Bevorzugt sind die beiden Planetenräder in Richtung der Zentralachse hintereinander, also axial voneinander beabstandet angeordnet. Die Neigung der Rotationsachsen der beiden Planetenräder gegenüber der Zentralachse und die axial zueinander beabstandete Anordnung der Planetenräder ermöglicht die Verwendung von Planetenrädern mit großen Durchmessern, deren Zähnezahl vorzugsweise nur geringfügig niedriger ist, als die Zähnezahl der Hohlräder. Dadurch ist es möglich, dass die Wälzkreisdurchmesser der Planetenräder bevorzugt größer als der halbe Wälzkreisdurchmesser der Innenverzahnung des Abstützhohlrades bzw. des Abtriebshohlrades sind. Das Abstützhohlrad und das Abtriebshohlrad weisen im Wesentlichen gleich große Durchmesser auf. Besonders bevorzugt sind die Wälzkreisdurchmesser der Planetenräder nur geringfügig kleiner als die Wälzkreisdurchmesser der Hohlräder wie oben erläutert.

Durch die Planetenräder mit großen Durchmessern und hoher Zähnezahl wird eine hohe Überdeckung im Zahneingriff zwischen den Planetenrädern und den Hohlrädern erreicht, was deren Tragfähigkeit und das übertragbare Drehmoment weiter erhöht. Die Überdeckung gibt an, wie viele Zähne einer Zahnradpaarung gleichzeitig im Eingriff sind.

Die Gesamtübersetzung des Taumelradwolfromgetriebes ergibt sich aus dem Verhältnis von der Zähnezahl des Abtriebhohlrades zur Zähnezahldifferenz zwischen den beiden Hohlrädern. Die Zähnezahldifferenz beträgt dabei wegen des doppelten Verzahnungseingriffes zumindest zwei Zähne.

Die Planetenraddrehachsen sind vorzugsweise derart um einen gleich großen Winkel gegenüber der Zentralachse geneigt, dass die Planetenraddrehachsen konzentrisch sind oder parallel zueinander verlaufen.

Gemäß einer weiteren bevorzugten Ausgestaltung der Erfindung weisen die Planetenräder eine konische Verzahnung auf. Die konische Verzahnung gleicht den Winkelversatz der geneigten Planetenraddrehachsen gegenüber nicht konischen, sondern zylindrischen Innenverzahnungen der Hohlräder aus, sodass ein punktueller Zahneingriff, der durch den Winkelversatz der Planetenraddrehachsen verursacht würde, verhindert wird und stattdessen ein vorteilhafter Linienkontakt entsteht. Der Konuswinkel der Zahnflanken der Planetenräder ist demnach derart auf den Achsneigungswinkel α der Planetenraddrehachsen abgestimmt, dass die Zahnflanken der Planetenräder und die Zahnflanken der Hohlräder sich zumindest nahezu über die gesamte Zahnbreite berühren. Dies bedeutet wiederum, dass der Betrag des Achsneigungswinkels der Planetenraddrehachsen zumindest angenähert dem Betrag des Konuswinkels der Zahnflanken der Planetenräder entspricht. Dabei können das Abstützhohlrad und das Abtriebshohlrad mit herkömmlichen, zylindrischen Verzahnungen versehen werden, was die Herstellung des Getriebes vereinfacht.

Eine weitere bevorzugte Ausführung der Erfindung sieht vor, dass die Verzahnungen der Planetenräder und der Hohlräder als Evolventenverzahnungen ausgeführt sind. Dies bietet die Vorteile, dass neben den spezifischen Eigenschaften der Evolventenverzahnung auch fertigungs- und entwicklungstechnische Erfahrungen, die für Evolventenverzahnungen umfangreich verfügbar sind, ausgenutzt werden können.

Da gängige konische, evolventische Verzahnungen beispielsweise in Form von Beveloidverzahnungen vorteilhaft bis zu einem Achskreuzwinkel von weniger als 15 Grad hergestellt werden, ist auch der Winkel α bevorzugt kleiner als 15 Grad.

Schließlich lassen sich Herstellkosten weiter reduzieren, indem die Antriebswelle und der Planetenträger gemäß einer weiteren bevorzugten Ausgestaltung der Erfindung einteilig ausgeführt werden. Die Drehsteifigkeit und die Stabilität der Anordnung können dadurch erhöht werden.

Bevorzugt ist der Planetenträger antriebsseitig in einem gehäusefesten Teil und abtriebsseitig in dem Abtriebshohlrad oder in der Abtriebswelle drehbar gelagert ist. Antriebsseitig kann der Planetenträger beispielsweise mittels eines Zylinderrollenlagers in dem gehäusefesten Abstützhohlrad gelagert sein, was zu einer besonders kompakten und robusten Bauweise des Getriebes führt.

Im Folgenden ist die Erfindung anhand von Ausführungsbeispielen in den nachfolgenden Figuren näher erläutert. Es zeigen
- Fig. 1: eine schematische Darstellung eines erfindungsgemäßen Taumelradwolfromgetriebes und
- Fig. 2: eine Schnittzeichnung eines Ausführungsbeispiels des erfindungsgemäßen Taumelradwolfromgetriebes.

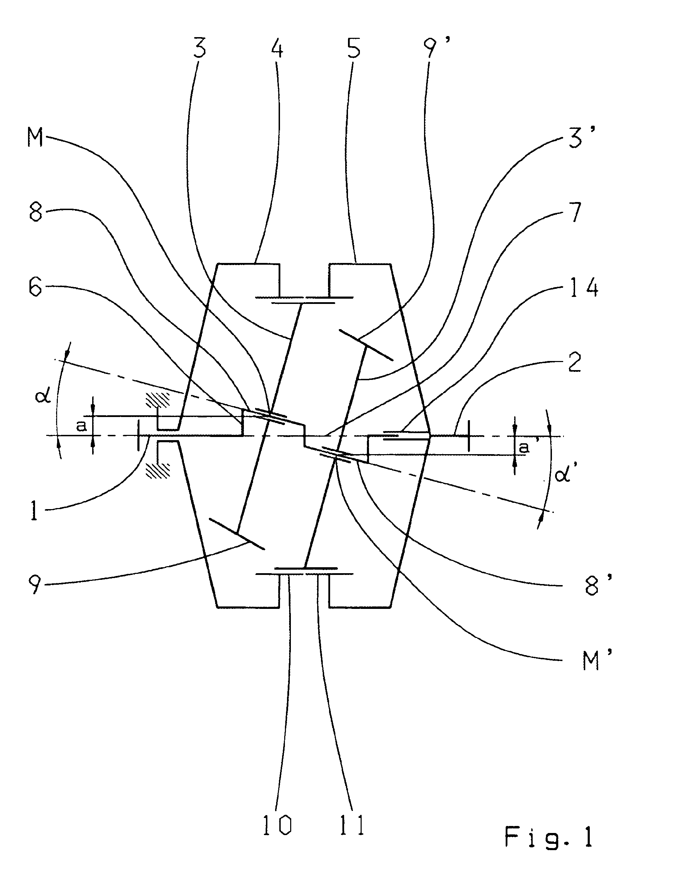

Das Ausführungsbeispiel des erfindungsgemäßen Taumelradwolfromgetriebes gemäß Fig. 1 wird über die Antriebswelle 1 angetrieben. Die Antriebswelle 1 ist einteilig mit dem Planetenträger 6 ausgeführt und rotiert um eine Zentralachse 7.

Der Planetenträger 6 weist zwei axial zueinander beabstandete Planetenraddrehachsen 8 und 8' auf, die mit jeweils gleich großem Abstand a bzw. a', jedoch in entgegen gesetzte radiale Richtungen zu der Zentralachse 7 angeordnet sind. Sie sind als zueinander im Bezug auf die Zentralachse 7 um 180 Grad versetzt angeordnet, ebenso wie die auf den Planetenraddrehachsen rotierbar angeordneten Planetenräder 3 und 3'. Die Planetenraddrehachsen 8 und 8' sind außerdem um den Winkel α bzw. α' gegenüber der Zentralachse 7 geneigt. Die Winkel α und α' sind gleich groß. Auf jeder der beiden Planetenraddrehachsen 8 und 8' ist jeweils ein Planetenrad 3 bzw. 3' rotierbar angeordnet. Verursacht durch die Neigung der Planetenraddrehachsen 8 und 8' gegenüber der Zentralachse 7 führen die Planetenräder 3 und 3' bei einer Rotation der Antriebswelle 1 eine Taumelbewegung um die Zentralachse 7 aus.

Im Schwerpunkt jedes Planetenrades 3 und 3' befindet sich der Massenmittelpunkt M bzw. M'. Die beiden Planetenräder 3 und 3' sind derart auf den Planetenraddrehachsen 8 und 8' angeordnet, dass die Massenmittelpunkte M und M' im Bezug auf die Zentralachse 7 um 180 Grad versetzt zueinander angeordnet sind. Die beiden Massenmittelpunkte M und M' liegen sich im Bezug auf die Zentralachse 7 und in Blickrichtung der Zentralachse also genau gegenüber. Des Weiteren ist der Abstand a des Massenmittelpunktes M des ersten Planetenrades 3 zur Zentralachse 7 genau gleich groß wie der Abstand a' des Massenmittelpunktes M' des zweiten Planetenrades 3' zur Zentralachse 7.

Konzentrisch zur Zentralachse 7 ist ein innenverzahntes Hohlrad als Abstützhohlrad 4 gehäusefestes angeordnet. Axial daran anschließend und ebenfalls konzentrisch zur Zentralachse 7 ist ein weiteres Hohlrad als Abtriebshohlrad 5 drehbar angeordnet. Das Abtriebshohlrad 5 ist drehfest mit der Abtriebswelle 2 verbunden oder einteilig mit der Abtriebswelle 2 ausgeführt. Die Innenverzahnungen 10 und 11 des Abstützhohlrades 4 und des Abtriebshohlrades 5 weisen den gleichen Durchmesser auf.

Jedes der beiden Planetenräder 3 und 3' greift an einer anderen Stelle mit seiner Außenverzahnung 9 bzw. 9' in beide Innenverzahnungen 10 und 11 des Abstützhohlrades 4 und des Abtriebshohlrades 5 ein. Die beiden Zahneingriffe zwischen dem jeweiligen Planetenrad 3 bzw. 3' und den Hohlrädern 4 und 5 sind zueinander um 180 Grad versetzt, also diametral gegenüberliegend.

Die Verzahnungen der beiden Planetenräder 3 und 3' sind derart konisch ausgeführt und ausgerichtet, dass sie die durch die Neigung der Planetenraddrehachsen 8 und 8' verursachte Schrägstellung der Planetenräder in den zylindrischen Innenverzahnungen 10 und 11 der beiden Hohlräder 4 und 5 ausgleichen.

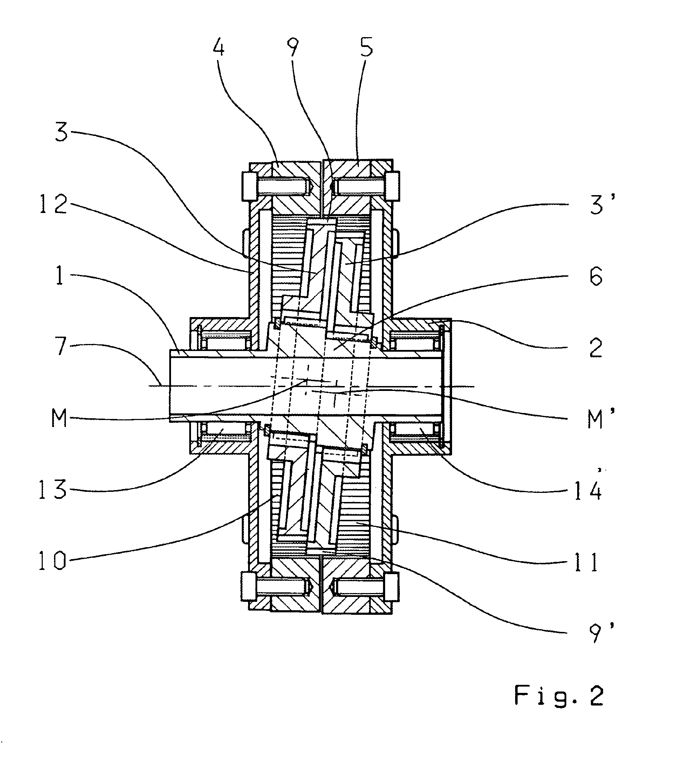

In der Fig. 2 ist eine mögliche konstruktive Ausgestaltung des erfindungsgemäßen Taumelradwolfromgetriebes im Schnitt dargestellt, die im Wesentlichen den gleichen Aufbau und die gleichen Einzelteile aufweist wie das Taumelradwolfromgetriebe in Fig. 1. Deshalb sind die entsprechenden Bauteile in beiden Figuren mit gleichen Bezugszeichen versehen.

Die Antriebswelle 1 ist gemäß Fig. 2 einteilig mit dem Planetenträger 6 ausgeführt und als zentrale Hohlwelle ausgebildet. Dies bietet die Möglichkeit, dass durch die zentrale Hohlwelle beispielsweise Kabel oder andere Wellen geführt werden können. Auf dem Planetenträger 6 sind exzentrisch zur Zentralachse 7 und mit einer Neigung gegenüber der Zentralachse Lagersitze für die beiden Planetenräder 3 und 3' angeordnet.

Die konische Verzahnung der Planetenräder 3 und 3' ist beispielsweise als Beveloidverzahnung ausgeführt. Eine Beveloidverzahnung ist eine evolventische Verzahnung mit Konizität und mit einer sich über die Zahnbreite verändernden Profilverschiebung. Eine derartige Verzahnung kann auf Fertigungsmaschinen für evolventische Stirnräder problemlos hergestellt werden.

Der Planetenträger 6 ist antriebsseitig in dem Gehäuseteil 12 mittels eines Zylinderrollenlagers 13 drehbar gelagert. Mit dem Gehäuseteil 12 ist auch das Abstützhohlrad 4 fest verschraubt. Abtriebsseitig ist der Planetenträger 6 in der als Hohlwelle ausgebildeten Abtriebswelle 2 mittels eines Zylinderrollenlagers 14 drehbar gelagert. Die Abtriebswelle 2 ist fest mit dem Abtriebshohlrad 5 verschraubt.

Beim Betrieb des Taumelradwolfromgetriebes rotieren die Antriebswelle 1 und mit ihr der starr verbundene Planetenträger 6 um die Zentralachse 7. Dadurch werden die schräg gelagerten Planetenräder 3 und 3' in eine Taumelbewegung versetzt, durch die der Zahneingriff am Umfang der Innenverzahnungen 10 und 11 der beiden Hohlräder 4 und 5 entlang wandert. Dabei wirkt jedes Planetenrad 3, 3' als Übertragungsglied, indem sich die Verzahnung 9, 9' des Planetenrades in der Innenverzahnung 10 des Abstützhohlrades 4 abstützt und das Abtriebshohlrad 5 über dessen Innenverzahnung 11 antreibt, weil die Innenverzahnung 11 des Abtriebshohlrades 5 weniger Zähne aufweist als die Innenverzahnung 10 des Abstützhohlrades 4.

Dabei hängt die Übersetzung zwischen Antriebsdrehzahl und Abtriebsdrehzahl von der Zähnezahl des Abtriebshohlrades 5 und von der Zähnezahldifferenz zwischen den beiden Hohlrädern 4 und 5 ab. Je größer die Zähnezahl des Abtriebshohlrades 5 und je geringer die Zähnezahldifferenz zwischen den beiden Hohlrädern 4 und 5, desto höher ist die Übersetzung zwischen Antriebsdrehzahl und Abtriebsdrehzahl.

Durch den gegenüberliegenden, doppelten Zahneingriff der beiden Planetenräder 3 und 3' in jeweils beide Hohlräder 4 und 5 ist jedoch eine minimale Zähnezahldifferenz von zwei Zähnen erforderlich.

### Bezugszeichen

| | |
|---|---|
| 1 | Antriebswelle |
| 2 | Abtriebswelle |
| 3 | Planetenrad |
| 3' | Planetenrad |
| 4 | Abstützhohlrad |
| 5 | Abtriebshohlrad |
| 6 | Planetenträger |
| 7 | Zentralachse |
| 8 | Planetenraddrehachse |
| 8' | Planetenraddrehachse |
| 9 | Verzahnung |
| 9' | Verzahnung |
| 10 | Innenverzahnung |
| 11 | Innenverzahnung |
| 12 | Gehäuseteil |
| 13 | Zylinderrollenlager |
| 14 | Zylinderrollenlager |

| | |
|---|---|
| M, M' | Massenmittelpunkt |
| a, a' | Abstand |
| α, α' | Winkel |

## Patentansprüche

1. Taumelradwolfromgetriebe mit einer Antriebswelle (1), mit einem Planetenträger (6), mit um jeweils eine Planetenraddrehachse (8, 8') rotierbaren Planetenrädern (3, 3'), mit einem feststehenden Abstützhohlrad (4) und mit einem Abtriebshohlrad (5), wobei die Antriebswelle (1), das Abstützhohlrad (4) und das Abtriebshohlrad (5) konzentrisch zu einer Zentralachse (7) angeordnet sind, wobei die Planetenraddrehachsen (8, 8') rotierbar um die Zentralachse (7) angeordnet sind, wobei die Planetenraddrehachsen (8, 8') jeweils um einen Winkel α bzw. α' gegenüber der Zentralachse (7) geneigt sind, und wobei die Planetenräder (3, 3') ständig im Eingriff stehen mit Innenverzahnungen (10, 11) des Abstützhohlrades (4) und des Abtriebshohlrades (5), **dadurch gekennzeichnet,**
**dass** die Antriebswelle drehfest mit dem Planetenträger (6) verbunden ist, dass auf dem Planetenträger (6) genau zwei Planetenräder (3, 3') angeordnet sind, dass die Massenmittelpunkte (M, M') der beiden Planetenräder (3, 3') mit gleich großem Abstand (a, a') zu der Zentralachse (7) angeordnet sind, und dass die Massenmittelpunkte (M, M') der beiden Planetenräder (3, 3') zueinander mit einem Winkelversatz von 180 Grad um die Zentralachse (7) angeordnet sind.

2. Taumelradwolfromgetriebe nach Anspruch 1, **dadurch gekennzeichnet, dass** die Planetenräder in axialer Richtung voneinander beabstandet auf dem Planetenträger (6) angeordnet sind, und dass die Wälzkreisdurchmesser der Planetenräder (3, 3') größer sind als der halbe Wälzkreisdurchmesser der Innenverzahnungen (10, 11) des Abstützhohlrades (4) und des Abtriebshohlrades (5).

3. Taumelradwolfromgetriebe nach Anspruch 1 oder 2, **dadurch gekennzeichnet, dass** die Planetenraddrehachsen (8, 8') der beiden Planetenräder (3, 3') parallel zueinander verlaufen.

4. Taumelradwolfromgetriebe nach einem der vorgenannten Ansprüche,
**dadurch gekennzeichnet, dass** die Planetenräder (3, 3') eine konische Verzahnung (9, 9') aufweisen.

5. Taumelradwolfromgetriebe nach einem der vorgenannten Ansprüche,
**dadurch gekennzeichnet, dass** die Verzahnungen (9, 9') der Planetenräder (3, 3') und die Innenverzahnungen (10, 11) der Hohlräder (4, 5) als Evolventenverzahnungen ausgeführt sind.

6. Taumelradwolfromgetriebe nach Anspruch 5, **dadurch gekennzeichnet, dass** der Winkel α kleiner als 15 Grad ist.

7. Taumelradwolfromgetriebe nach Anspruch 5 oder 6, **dadurch gekennzeichnet, dass** die Evolventenverzahnungen (10, 11) des Abstützhohlrades (4) und des Abtriebshohlrades (5) zylindrisch ausgeführt sind.

8. Taumelradwolfromgetriebe nach einem der vorgenannten Ansprüche,
**dadurch gekennzeichnet, dass** die Antriebswelle (1) und der Planetenträger (6) einteilig ausgeführt sind.

9. Taumelradwolfromgetriebe nach einem der vorgenannten Ansprüche,
**dadurch gekennzeichnet, dass** der Planetenträger (6) antriebsseitig in einem gehäusefesten Teil (12) und abtriebsseitig in dem Abtriebshohlrad (5) drehbar gelagert ist.

## Claims

1. Swashplate-type Wolfrom gearing having a drive input shaft (1), having a planet carrier (6), having planet gears (3, 3') which are rotatable about in each case one planet gear rotary axle (8, 8'), having a static supporting internal gear (4) and having a drive output internal gear (5), wherein the drive input shaft (1), the supporting internal gear (4) and the drive output internal gear (5) are arranged concentrically with respect to a central axis (7), wherein the planet gear rotary axles (8, 8') are arranged so as to be rotatable about the central axis (7), wherein the planet gear rotary axles (8, 8') are inclined in each case by an angle α or α' respectively with respect to the central axis (7), and wherein the planet gears (3, 3') are permanently in engagement with internal toothings (10, 11) of the supporting internal gear (4) and of the drive output internal gear (5), **characterized**
**in that** the drive input shaft is connected rotationally conjointly to the planet carrier (6), in that precisely two planet gears (3, 3') are arranged on the planet carrier (6), in that the centres of mass (M, M') of the two planet gears (3, 3') are arranged so as to be at equal distance (a, a') from the central axis (7), and in that the centres of mass (M, M') of the two planet gears (3, 3') are arranged with an angular offset of 180 degrees with respect to one another about the central axis (7).

2. Swashplate-type Wolfrom gearing according to Claim 1, **characterized in that** the planet gears are arranged on the planet carrier (6) so as to be spaced apart from one another in the axial direction, and **in that** the pitch circle diameters of the planet gears (3, 3') are greater than half the pitch circle diameter of the internal toothings (10, 11) of the supporting internal gear (4) and of the drive output internal gear (5).

3. Swashplate-type Wolfrom gearing according to Claim 1 or 2, **characterized in that** the planet gear rotary axles (8, 8') of the two planet gears (3, 3') run parallel to one another.

4. Swashplate-type Wolfrom gearing according to one of the preceding claims, **characterized in that** the planet gears (3, 3') have a conical toothing (9, 9').

5. Swashplate-type Wolfrom gearing according to one of the preceding claims, **characterized in that** the toothings (9, 9') of the planet gears (3, 3') and the internal toothings (10, 11) of the internal gears (4, 5) are formed as involute toothings.

6. Swashplate-type Wolfrom gearing according to Claim 5, **characterized in that** the angle α is less than 15 degrees.

7. Swashplate-type Wolfrom gearing according to Claim 5 or 6, **characterized in that** the involute toothings (10, 11) of the supporting internal gear (4) and of the drive output internal gear (5) are of cylindrical form.

8. Swashplate-type Wolfrom gearing according to one of the preceding claims, **characterized in that** the drive input shaft (1) and the planet carrier (6) are formed in one piece.

9. Swashplate-type Wolfrom gearing according to one of the preceding claims, **characterized in that** the planet carrier (6) is rotatably mounted at the drive input side in a part (12) which is fixed with respect to a housing and at the drive output side in the drive output internal gear (5).

## Revendications

1. Engrenage oscillant comprenant un arbre d'entraînement (1), un porte-satellites (6), des satellites (3, 3') pouvant tourner à chaque fois autour d'un axe de rotation de satellite (8, 8'), une couronne dentée de support fixe (4) et une couronne de sortie (5), l'arbre d'entraînement (1), la couronne de support (4) et la couronne de sortie (5) étant disposés concentriquement à un axe central (7), les axes de rotation de satellites (8, 8') étant disposés de manière rotative autour de l'axe central (7), les axes de rotation de satellites (8, 8') étant à chaque fois inclinés suivant un angle α, respectivement α', par rapport à l'axe central (7), et les satellites (3, 3') étant en prise constante avec des dentures internes (10, 11) de la couronne de support (4) et de la couronne de sortie (5), **caractérisé en ce que**
l'arbre d'entraînement est connecté de manière solidaire en rotation au porte-satellites (6), **en ce que** deux satellites (3, 3') exactement sont disposés sur le porte-satellites (6), **en ce que** les centres de masse (M, M') des deux satellites (3, 3') sont disposés à égale distance (a, a') de l'axe central (7) et **en ce que** les centres de masse (M, M') des deux satellites (3, 3') sont disposés l'un par rapport à l'autre avec un décalage angulaire de 180 degrés autour de l'axe central (7).

2. Engrenage oscillant selon la revendication 1, **caractérisé en ce que** les satellites sont disposés dans la direction axiale à distance l'un de l'autre sur le porte-satellites (6), et **en ce que** les diamètres des cercles de roulement des satellites (3, 3') sont supérieurs au demi diamètre des cercles de roulement des dentures internes (10, 11) de la couronne de support (4) et de la couronne de sortie (5).

3. Engrenage oscillant selon la revendication 1 ou 2, **caractérisé en ce que** les axes de rotation des satellites (8, 8') des deux satellites (3, 3') s'étendent parallèlement les uns aux autres.

4. Engrenage oscillant selon l'une quelconque des revendications précédentes, **caractérisé en ce que** les satellites (3, 3') présentent une denture conique (9, 9').

5. Engrenage oscillant selon l'une quelconque des revendications précédentes, **caractérisé en ce que** les dentures (9, 9') des satellites (3, 3') et les dentures internes (10, 11) des couronnes (4, 5) sont réalisées sous forme de dentures en développante.

6. Engrenage oscillant selon la revendication 5, **caractérisé en ce que** l'angle α est inférieur à 15 degrés.

7. Engrenage oscillant selon la revendication 5 ou 6, **caractérisé en ce que** les dentures en développante (10, 11) de la couronne de support (4) et de la couronne de sortie (5) sont réalisées sous forme cylindrique.

8. Engrenage oscillant selon l'une quelconque des revendications précédentes, **caractérisé en ce que** l'arbre d'entraînement (1) et le porte-satellites (6) sont réalisés d'une seule pièce.

9. Engrenage oscillant selon l'une quelconque des revendications précédentes, **caractérisé en ce que** le porte-satellites (6) est monté à rotation du côté de l'entraînement dans une partie fixée au boîtier (12) et du côté de la sortie dans la couronne de sortie (5).
